# EUROPEAN PATENT APPLICATION

(11) **EP 4 425 848 A1**
(43) Date of publication of application: **04.09.2024**
(21) Application number: 22897359.0
(22) Date of filing: 26.09.2022
(51) Int. Cl.: H04L 12/46

(54) **DATA DISTRIBUTION METHOD AND SYSTEM, AND OPERATION CONTROL APPARATUS AND TERMINAL DEVICE**

(30) Priority: 25.11.2021 CN 202111414525
(71) Applicant: ZTE Corporation, Shenzhen, Guangdong 518057 (CN)
(72) Inventor: YANG, Tao, Shenzhen, Guangdong 518057 (CN)
(74) Representative: Savi, Massimiliano
(86) International application number: PCT/CN2022/121447
(87) International publication number: WO 2023/093273

(57) **Abstract**

Disclosed in the present application are a data distribution method and system, and an operation control apparatus and a terminal device. The data distribution method is applied to a CPE, and comprises: receiving an IP data packet from a data collection control module, wherein the IP data packet carries a data message (S 100); acquiring a destination address of the data message (S200); performing VXLAN encapsulation on the data message according to the destination address, so as to obtain a VXLAN message (S300); and sending the VXLAN message to a server (S400).

## Description

### CROSS-REFERENCE TO RELATED APPLICATION

This application is filed on the basis of the Chinese patent application No. 202111414525.6 filed November 25, 2021, and claims priority of the Chinese patent application, the entire contents of which are incorporated herein by reference.

### TECHNICAL FIELD

The present disclosure relates to the field of communication, and in particular to a method for data distribution, a system, an operation and control device, and a terminal device.

### BACKGROUND

Virtual eXtensible Local Area Network (VXLAN) is currently set forth as a kind of network virtualization technology, which is an extension of VLAN. VXLAN can penetrate the three-layer network and extend the second layer. Various manufacturers have introduced products that support the function of VXLAN, but all of them have pre-configured the IP address and port of the peer end of the VXLAN tunnel. Data transmission is possible through multiple VXLAN tunnels. However, it is ineffective to directly send the data to different tunnel endpoints correspondingly.

### SUMMARY

Provided are a method for data distribution, a system, an operation and control device, and a terminal device in some embodiments of the present disclosure.

According to an embodiment, a method for data distribution is provided. The method is applied to a Customer Premises Equipment (CPE). The method includes: receiving an Internet Protocol (IP) packet from a data acquisition and control module; where the IP packet carries a data packet; acquiring a destination address of the data packet; performing Virtual eXtensible Local-Area Network (VXLAN) encapsulation on the data packet, according to the destination address, to acquire a VXLAN packet; and sending the VXLAN packet to a server.

According to an embodiment, a method for data distribution is provided. The method is applied to a server. The method includes: receiving a Virtual eXtensible Local-Area Network (VXLAN) packet from a Customer Premises Equipment (CPE); where an outer User Datagram Protocol (UDP) address of the VXLAN packet is an address of the server; decapsulating the VXLAN packet to acquire an original data packet; acquiring a data parameter according to the data packet; and sending an operative instruction to a control module according to the data parameter, to instruct the control module to perform corresponding control and regulation operations.

According to an embodiment, a system for data distribution is provided. The system includes, a Customer Premises Equipment (CPE), configured to: receive an Internet Protocol (IP) data packet from a data acquisition and control module; where the IP data packet carries a data packet; acquire a destination address of the data packet; perform Virtual eXtensible Local-Area Network (VXLAN) encapsulation on the data packet according to the destination address, to acquire a VXLAN packet; and send the VXLAN packet to a server; and a server configured to: receive the VXLAN packet from the CPE; where an outer User Datagram Protocol (UDP) destination address of the VXLAN packet is an address of the server; decapsulate the VXLAN packet to acquire an original data packet; acquire a data parameter according to the data packet; and send an operative instruction to a control module, according to the data parameter, to instruct the control module to perform corresponding control and regulation operations.

According to an embodiment, an operation and control device is provided. The device includes at least one controlling processor and a memory configured to be communicatively connected with the at least one controlling processor; where the memory stores an instruction executable by the at least one controlling processor which, when executed by the at least one controlling processor, causes the at least one controlling processor to carry out the method applied to the CPE as described above.

According to an embodiment, a terminal device is provided. The terminal device includes the operation and control device as described above.

According to an embodiment, a server is provided. The server includes at least one controlling processor and a memory configured to be in communicative connection with the at least one controlling processor; where the memory stores an instruction executable by the at least one controlling processor which, when executed by the at least one controlling processor, causes the at least one controlling processor to carry out the method applied to the server as described above.

According to an embodiment, a computer-readable storage medium is provided. The computer-readable storage medium stores thereon a computer-executable instruction which, when executed by a processor, causes the processor to carry out any one of the methods as described above.

Other features and advantages of the present disclosure will be illustrated in the following description, and in part will be apparent from the description, or may be understood by practicing the present disclosure. The objects and other advantages of the present disclosure can be achieved and obtained by the structure particularly set forth in the description, claims and drawings.

### BRIEF DESCRIPTION OF DRAWINGS

The drawings are intended to provide a further understanding of the technical scheme of the present disclosure, and constitute a part of the specification, and they are intended to illustrate the technical scheme of the present disclosure in conjunction with the embodiments of the present disclosure, but are not intended to limit the technical scheme of the present disclosure.

Some embodiments of the present disclosure will be further illustrated with reference to the drawings.
FIG. 1 depicts a schematic diagram showing a system for data distribution according to an embodiment of the present disclosure;
FIG. 2 depicts a flowchart showing operations of a method for data distribution according to an embodiment of the present disclosure;
FIG. 3 depicts a flowchart showing sub-operations of a method for data distribution according to an embodiment of the present disclosure;
FIG. 4 depicts a flowchart showing operations of a method for data distribution according to another embodiment of the present disclosure;
FIG. 5 depicts a schematic diagram showing a system for data distribution according to an embodiment of the present disclosure;
FIG. 6 depicts a flowchart showing overall operations involved in a system for data distribution according to an embodiment of the present disclosure;
FIG. 7 depicts a schematic diagram showing an operation and control device according to an embodiment of the present disclosure; and
FIG. 8 depicts a schematic diagram showing a server according to an embodiment of the present disclosure.

### DETAILED DESCRIPTION

This section will describe the several embodiments of the present disclosure . Various embodiments of the present disclosure are shown in the drawings. The drawings are intended to illustrate to the description with graphics, so that the readers can intuitively and vividly understand each technical feature and the overall technical scheme of the present disclosure. The drawings, however, shall not be interpreted as limitations to the scope of the present disclosure.

In the description of various embodiments of the present disclosure, the terms such as provide, mount or connect should be broadly understood, unless otherwise specified, and those having ordinary skills in the art can reasonably determine the specific meanings of the above terms in various embodiments of the present disclosure in conjunction with the specific contents of the technical scheme.

Currently, 5G is more and more widely employed in the telecommunication industry. In industrial applications, each network node is typically required to realize the mutual transmission of layer 2 data. VXLAN is an extension of Virtual Local Area Network (VLAN). VXLAN can penetrate the three-layer network to extend the second layer. Various manufacturers have introduced products that support the function of VXLAN, but the IP address and port of the peer end of VXLAN tunnel are pre-configured, so data cannot be sent to different tunnel endpoints correspondingly. In practical applications, in order to realize the two-layer data interaction and data processing of the server in the network, not only the 5G CPE terminal device is required to support the function of VXLAN, but also the core network elements are required to perform different processing on the data sent by different terminal devices. The server at the core network side parses and processes the data reported by the terminal devices and sends the data to the corresponding control unit for further processing.

In view of this, in some embodiments of the present disclosure, a method for data distribution, a system, an operation and control device, and a terminal device are provided. Thereby, it is possible to dynamically change the tunnel endpoint of VXLAN, reduce the transmission of unrelated data across the network, improve the network utilization rate, and reduce the complexity of data processing by the server at the peer end of the tunnel.

Some embodiments of the present disclosure will be further illustrated with reference to the drawings.

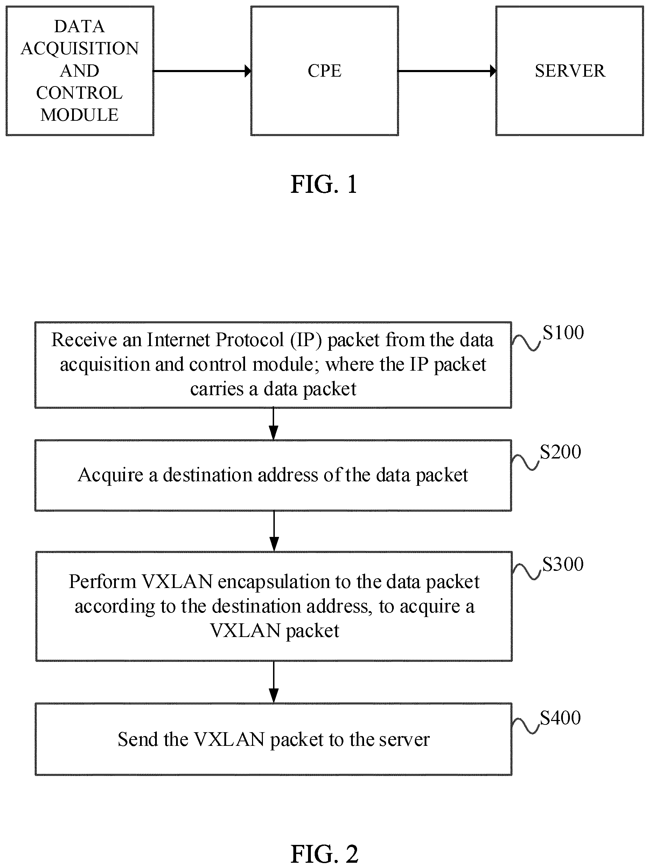

FIG. 1 depicts a schematic diagram showing a system for data distribution according to an embodiment of the present disclosure. The system includes a data acquisition and control module, a Customer Premises Equipment (CPE), and a server. The data acquisition and control module is configured to collect data, generate an original data packet, and to send the data packet to the CPE through an IP packet. The CPE is configured to receive the IP data packet from the data acquisition and control module, acquire the destination address of the data packet in the IP data packet, perform VXLAN encapsulation to the data packet according to the destination address, dynamically change the endpoint of the VXLAN tunnel, and send the VXLAN packet to the corresponding server. The server is configured to create a VXLAN tunnel connected with the CPE, receive the VXLAN packet from the CPE, decapsulate the VXLAN packet to obtain the original data packet, obtain the data parameters according to the data packet, and send an operation instruction to the control module according to the data parameters.

Referring to FIG. 2, according to an embodiment, a method for data distribution is provided. The method is applied to a CPE. The method includes but is not limited to operations S 100, S200, S300, and S400.

At operation S 100, an Internet Protocol (IP) packet is received from the data acquisition and control module. The IP packet carries a data packet.

At operation S200, a destination address of the data packet is acquired.

At operation S300, the data packet is subjected to a VXLAN encapsulation according to the destination address, to acquire a VXLAN packet.

At operation S400, the VXLAN packet is sent to the server.

In an embodiment, the data acquisition and control module collects data and generates an original data packet, and sends the data packet to CPE through an IP packet. CPE receives the IP packet carrying the data packet from the data acquisition and control module, parses the data packet, obtains the destination address of the data packet, and carries out VXLAN encapsulation on the data packet according to the destination address to obtain a VXLAN packet. The CPE sends the VXLAN packet directly to the corresponding server. In this way, the dynamic change of VXLAN tunnel endpoints is achieved. Data can be sent to different tunnel endpoints correspondingly. The transmission of unrelated data across the network is reduced. The network utilization rate is increased. The complexity of data processing by the server at the peer end of the tunnel is lowered.

It should be noted that the original data packet is Layer 2 data. The CPE may not change the original Layer 2 data during the VXLAN encapsulation of the data packet according to the destination address of the data packet.

It should also be noted that, compared with some cases, the CPE end can change the address of the tunnel peer end. That is, the tunnel address of the data packet is changed before the VXLAN packet is sent to the network. The VXLAN packet is thus forwarded in advance. The server at the core network side does not need to carry out the forwarding function. Thus, the complexity of data processing of the server at the tunnel peer end is reduced. The complexity of the implementation of a single server is also reduced.

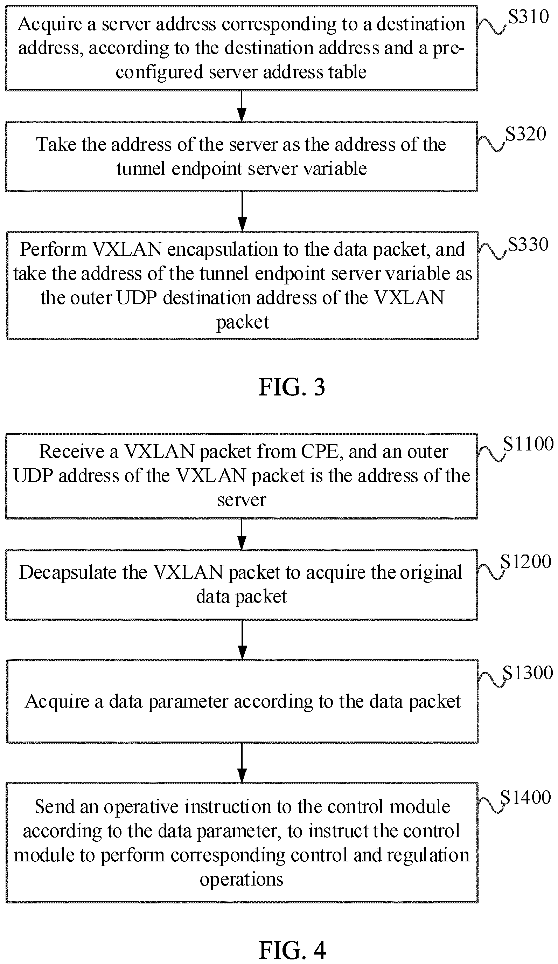

According to an embodiment, a method for data distribution is provided. Referring to FIG. 3, which depicts a schematic diagram showing sub-operations of operation S300 described with respect to FIG. 2, as shown, operation S300 includes but is not limited to operations S310, S320, and S330.

At operation S310, an address of a server corresponding to a destination address is obtained, according to the destination address and a pre-configured server address table.

It should be noted that the CPE side can pre-configure the IP addresses of unicast servers and multicast servers, so as to obtain the address of the server corresponding to the destination address according to the destination address and the pre-configured server address table. Thereby, a VXLAN tunnel is established. The pre-configured server address is taken as the endpoint of the peer end of the tunnel.

At operation S320, the address of the server is served as the address of the tunnel endpoint server variable.

At operation S330, the data packet is subjected to VXLAN encapsulation, and the address of the tunnel endpoint server variable is served as the outer UDP destination address of the VXLAN packet.

In an embodiment, CPE is pre-configured with a server address table. After acquiring the destination address of the data packet, the CPE can find the address of the server corresponding to the destination address of the data packet according to the destination address and the pre-configured server address table. The CPE then stores the found address of the server in the tunnel endpoint server variable S. That is, the found address of the server is served as the address of the tunnel endpoint server variable S. During the VXLAN encapsulation of the data packet, the address of the tunnel endpoint server variable S is served as the outer UDP destination address of the VXLAN packet. That is, the outer UDP destination address of the encapsulated VXLAN packet is the address of the server corresponding to the destination address of the data packet. In this way, the dynamic change of the VXLAN tunnel endpoint is achieved. The transmission of unrelated data across the network is reduced. The network utilization rate is improved. The complexity of data processing by the server at the peer end of the tunnel is lowered.

It should be noted that servers include unicast servers and multicast servers. The server address table pre-configured in the CPE includes unicast server addresses and multicast server addresses.

In an embodiment, in response to a determination that the destination address is a multicast address, the multicast server address corresponding to the destination address of the data packet is acquired according to the pre-configured multicast server address table. CPE obtains the destination address from the data packet, determines the type of the destination address, and finds the multicast server address corresponding to the destination address of the data packet from the pre-configured multicast server address table when the address of the data packet is determined to be a multicast address. The CPE then stores the multicast server address in the tunnel endpoint server variable S as the address of the tunnel endpoint server variable S. Then the CPE takes the address of the tunnel endpoint server variable S as the outer UDP destination address of the VXLAN packet. In this way, the dynamic change of the VXLAN tunnel endpoint is achieved. The transmission of unrelated data across the network is reduced. The network utilization rate is improved. The complexity of data processing by the server at the peer end of the tunnel is lowered.

In an embodiment, in response to a determination that the destination address is a unicast address, the unicast server address corresponding to the destination address of the data packet is obtained according to the pre-configured unicast server address table. CPE obtains the destination address from the data packet, determines the type of the destination address, and finds the unicast server address corresponding to the destination address of the data packet from the pre-configured unicast server address table when the address of the data packet is determined to be a unicast address. The CPE then stores the unicast server address in the tunnel endpoint server variable S as the address of the tunnel endpoint server variable S. Then the CPE takes the address of the tunnel endpoint server variable S as the outer UDP destination address of the VXLAN packet. In this way, the dynamic change of the VXLAN tunnel endpoint is achieved. The transmission of unrelated data across the network is reduced. The network utilization rate is improved. The complexity of data processing by the server at the peer end of the tunnel is lowered.

Referring to FIG. 4, according to an embodiment, a method for data distribution is provided. The method is applied to a server. The method includes but is not limited to operations S1100, S1200, S1300, and S1400.

At operation S 1100, a VXLAN packet is received from CPE, and an outer UDP address of the VXLAN packet is the address of the server.

At operation S1200, the VXLAN packet is decapsulated to acquire the original data packet.

At operation S 1300, a data parameter is acquired according to the data packet.

At operation S1400, an operative instruction is sent to the control module according to the data parameter, to instruct the control module to perform corresponding control and regulation operations.

In an embodiment, a server at the core network side creates a VXLAN tunnel connected with the CPE end, and receives a VXLAN packet from the CPE. The outer UDP address of the VXLAN packet is the address of the server. The server decapsulates the received VXLAN packet to obtain an original data packet, parses the data packet to obtain a data parameter, and sends an operative instruction to the control module according to the data parameter, to instruct the control module to perform control and regulation operations accordingly. The task of VXLAN packet forwarding is offloaded from the server at the VXLAN tunnel endpoint. Thus, the complexity of data processing of the server at the tunnel peer end is reduced. The complexity of the implementation of a single server is also reduced.

It should be noted that in this embodiment, the two ends of the VXLAN tunnel are the CPE end and the server end, respectively. The CPE sends the VXLAN packet, and the server at the core network side receives the VXLAN packet. The data can be directly sent from the CPE end to the server end, which improves the network utilization rate.

It can be understood that, the CPE can change the endpoint of the VXLAN tunnel. The VXLAN packet can be forwarded in advance before being sent to the network. The complexity of data processing by the server at the peer end of the VXLAN tunnel is reduced by eliminating the need for forwarding the VXLAN packet. Thereby, the data processing is simplified, thus facilitating the implementation of a single server.

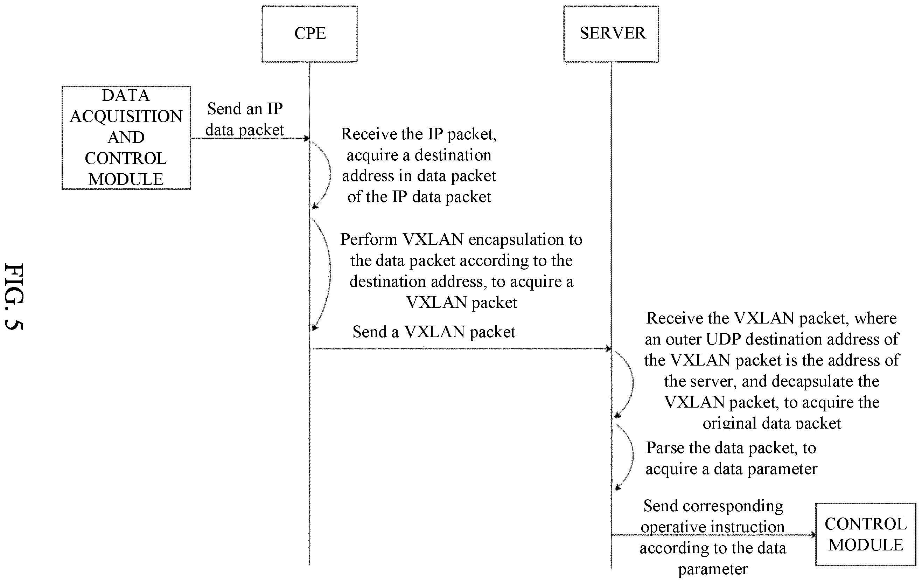

Referring to FIG. 5, according to an embodiment, a system for data distribution is provided. The system includes a Customer Premises Equipment (CPE) and a server.

The CPE is configured to: receive an Internet Protocol (IP) data packet from a data acquisition and control module; where the IP data packet carries a data packet; acquire a destination address of the data packet; perform Virtual eXtensible Local-Area Network (VXLAN) encapsulation on the data packet according to the destination address, to acquire a VXLAN packet; and send the VXLAN packet to a server.

The server is configured to: receive the VXLAN packet from the CPE; where an outer User Datagram Protocol (UDP) destination address of the VXLAN packet is an address of the server; decapsulate the VXLAN packet to acquire an original data packet; acquire a data parameter according to the data packet; and send an operative instruction to a control module, according to the data parameter, to instruct the control module to perform corresponding control and regulation operations.

It can be understood that, in this embodiment, provided at the two ends of the VXLAN tunnel, are a CPE and a server respectively. The data packet can be subjected to VXLAN encapsulation according to the destination address of the data packet at the CPE, packet, so as to realize the dynamic change of the endpoint of the VXLAN tunnel, thereby reducing the transmission of unrelated data across the network and improving the network utilization rate.

It can also be understood that the CPE can dynamically change the endpoint of the VXLAN tunnel, that is, the VXLAN packet can be forwarded in advance at the CPE end. The server end does not need to provide the function of forwarding the VXLAN packet. Thus, the complexity of data processing by the VXLAN peer server is reduced and the implementation complexity of a single server is also reduced.

In an embodiment, the CPE acquires the address of the server corresponding to the destination address according to the destination address and the pre-configured server address table; and stores the address of the server into the tunnel endpoint server variable S. That is, the address of the server is taken as the address of the tunnel endpoint server variable. The data packet is subjected to VXLAN encapsulation. During the encapsulation, the address of the tunnel endpoint server variable S is taken as the destination address of the outer UDP of the VXLAN packet.

It should be noted that the CPE is pre-configured with a server address table, which includes IP addresses of unicast servers and multicast servers. The server address table can be looked up according to the destination address of the data packet to acquire the corresponding address of the server.

In an embodiment, after acquiring the destination address of the data packet, the CPE determines the type of the destination address. If it is determined that the destination address is a multicast address, the CPE obtains the multicast server address corresponding to the destination address according to the pre-configured multicast server address table. If it is determined that the destination address is a unicast address, the CPE acquires the unicast server address corresponding to the destination address according to the pre-configured unicast server address table, and stores the address of the server corresponding to the destination address in the tunnel endpoint server variable S as the address of the tunnel endpoint server variable S. Then the address of the tunnel endpoint server variable S is served as the destination address of the outer UDP of the VXLAN packet. Such that, the VXLAN encapsulation of the data packet is completed, and the encapsulated VXLAN packet is sent to the corresponding server. The CPE can send the VXLAN packet to different tunnel endpoints correspondingly, thus reducing the transmission of unrelated data across the network and improving the network utilization rate. The server at the peer end of VXLAN does not need to forward the VXLAN packet. Thereby, the data processing is simplified, thus facilitating the implementation of a single server.

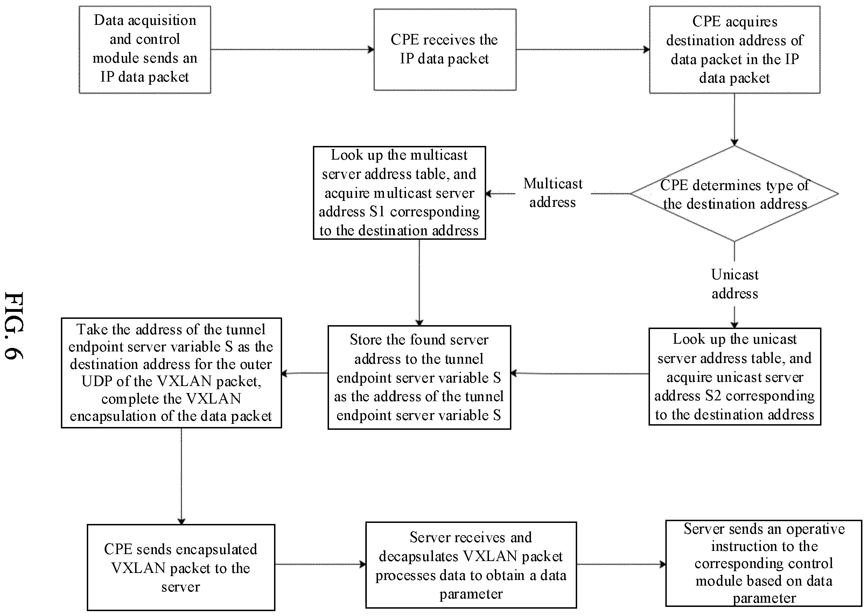

In the following, the system for data distribution will be described in greater detail with reference to FIG. 6.

In an embodiment, the data acquisition and control module collects data, generates an original layer 2 data packet, sends the data packet to CPE through an IP packet. The CPE receives the IP packet, obtains the data packet carried in the IP packet, parses the data packet, obtains the destination address of the data packet, and determines the type of the destination address. If it is determined that the destination address is a multicast address, the CPE obtains the multicast server address S 1 corresponding to the destination address of the data packet by looking up the pre-configured multicast server address table. If it is determined that the destination address is a unicast address, the CPE acquires the unicast server address S2 corresponding to the destination address by looking up the pre-configured unicast server address table, and stores the found address of the server in the tunnel endpoint server variable S as the address of the tunnel endpoint server variable S. Then, the CPE takes address of the tunnel endpoint server variable S as the destination address of the outer UDP of the VXLAN packet. Such that, the VXLAN encapsulation of the data packet is completed, to acquire the VXLAN packet. Then the CPE sends the encapsulated VXLAN packet to the server through the network. The server receives the VXLAN packet, in which the outer UDP destination address of the VXLAN packet is the address of the server. The server decapsulates the VXLAN packet to obtain the original Layer 2 data packet, parses the data packet, obtains a data parameter, and sends an operative instruction to the corresponding control module based on the data parameter to enable the control module to perform corresponding control and regulation operations. In this embodiment, CPE dynamically changes the tunnel endpoint of VXLAN. The server establishes a VXLAN tunnel connected with the CPE. Data is sent to different servers from CPE correspondingly. In this way, the transmission of unrelated data across the network is reduced. The network utilization rate is improved. The complexity of data processing by the server at the peer end of the VXLAN tunnel is lowered. And the implementation of a single server is facilitated.

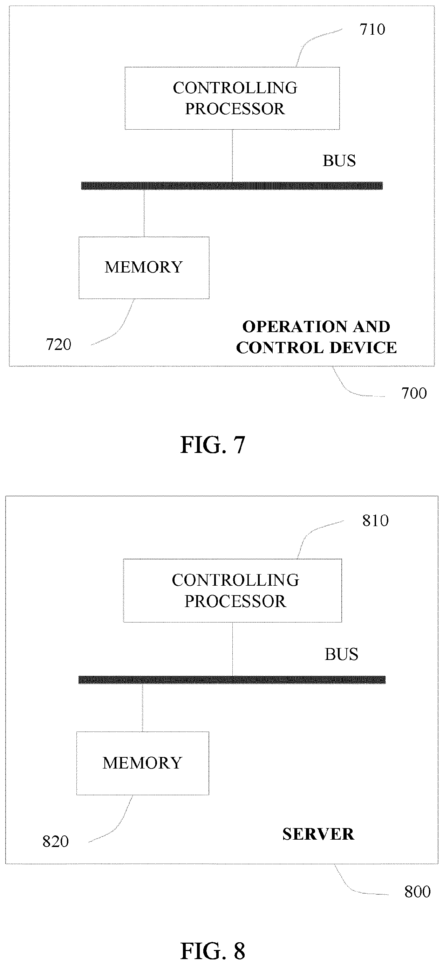

Referring to FIG. 7, according to an embodiment, an operation and control device 700 is provided. The operation and control device 700 includes at least one controlling processor 710 and a memory 720 configured to be in communicative connection with the at least one controlling processor 710. The memory 720 stores an instruction executable by the at least one controlling processor 710 which, when executed by the at least one controlling processor 710, causes the at least one controlling processor 710 to carry out the method described in conjunction with FIG. 2 or FIG. 3.

In an embodiment, the data acquisition and control module collects data and generates an original data packet, and sends the data packet to CPE through an IP packet. CPE receives the IP packet from the data acquisition and control module, obtains the destination address from the data packet carried by the IP packet, performs VXLAN encapsulation to the data packet according to the destination address, and then sends the encapsulated VXLAN packet to the server. In this way, the dynamic change of the VXLAN tunnel endpoint is achieved. Data is sent to different tunnel endpoints accordingly. The transmission of unrelated data across the network is reduced. The network utilization rate is improved. The complexity of data processing by the server at the peer end of the VXLAN tunnel is lowered. The complexity of the implementation of a single server is also lowered.

According to an embodiment, a terminal device is provided. The terminal device includes the operation and control device 700 as described above in conjunction with FIG. 7.

In this embodiment, the data acquisition and control module collects data and generates an original data packet, and sends the data packet to CPE through an IP packet. CPE receives the IP packet from the data acquisition and control module, obtains the destination address from the data packet carried by the IP packet, performs VXLAN encapsulation to the data packet according to the destination address, and then sends the encapsulated VXLAN packet to the server. The terminal device can dynamically change the tunnel endpoints of VXLAN and send data to different tunnel endpoints accordingly. In this way, the transmission of unrelated data across the network is reduced. The network utilization rate is improved. The complexity of data processing by the server at the peer end of the VXLAN tunnel is lowered. And the complexity of implementation of a single server is also lowered.

Referring to FIG. 8, according to an embodiment, a server 800 is provided. The server 800 includes at least one controlling processor 810 and a memory 820 configured to be in communicative connection with the at least one controlling processor 810. The memory 820 stores an instruction executable by the at least one controlling processor 810 which, when executed by the at least one controlling processor 810, causes the at least one controlling processor 810 to carry out the method described in conjunction with FIG. 4.

In this embodiment, the server is configured to: receive the VXLAN packet from the CPE; where an outer User Datagram Protocol (UDP) destination address of the VXLAN packet is an address of the server; decapsulate the VXLAN packet to acquire an original data packet; acquire a data parameter according to the data packet; and send an operative instruction to a control module, according to the data parameter, to instruct the control module to perform corresponding control and regulation operations. The server at the endpoint of the VXLAN tunnel does not provide the function of forwarding VXLAN packets, which reduces the complexity of data processing and is easy for a single server to implement.

According to an embodiment, a computer-readable storage medium is provided. The computer-readable storage medium stores a computer-executable instruction which, when executed by a processor, causes the processor to carry out operations of a method for data distribution, for example, operations S100 to S400 described in conjunction with FIG. 2, S310 to S330 described in conjunction with FIG. 3, or S 1100 to S 1400 described in conjunction with FIG. 4.

Provided are a method for data distribution applied to CPE, a method for data distribution applied to a server, a system for data distribution, an operation and control device, a terminal device, a server and a computer-readable storage medium, in some embodiments of the present disclosure. According to an embodiment, the data acquisition and control module collects data and generates an original data packet, and sends the data packet to CPE through an IP packet. CPE receives the IP packet from the data acquisition and control module, obtains the destination address from the data packet carried by the IP packet, performs VXLAN encapsulation to the data packet according to the destination address, and then sends the encapsulated VXLAN packet to the server directly. The server receives the VXLAN packet from the CPE; where an outer User Datagram Protocol (UDP) destination address of the VXLAN packet is an address of the server; decapsulates the VXLAN packet to acquire an original data packet; acquires a data parameter according to the data packet; and sends an operative instruction to a control module, according to the data parameter, to instruct the control module to perform corresponding control and regulation operations. In this way, the dynamic change of the VXLAN tunnel endpoint is achieved. Data is sent to different tunnel endpoints accordingly. The transmission of unrelated data across the network is reduced. The network utilization rate is improved.

It shall be appreciated by a person having ordinary skills in the art that all or some of the steps and systems disclosed above can be implemented as software, firmware, hardware and their appropriate combinations. Some or all physical components can be implemented as software executed by a processor, such as a central processing unit, a digital signal processor or a microprocessor, or as hardware, or as an integrated circuit, such as an application-specific integrated circuit. Such software can be distributed on computer-readable media, which can include computer storage media or non-transitory media and communication media or transitory media. As is well known to a person having ordinary skills in the art, the term computer storage medium includes volatile and nonvolatile, removable and non-removable medium implemented in any method or technology for storing information such as computer-readable instructions, data structures, program modules or other data. Computer storage medium includes, but is not limited to, RAM, ROM, EEPROM, flash memory or other memory technologies, CD-ROM, digital versatile disks (DVD) or other optical disk storage, magnetic boxes, tapes, magnetic disk storage device or other magnetic storage device, or any other medium that can be configured to store desired information and accessible by a computer. Furthermore, it is well known to a person having ordinary skills in the art that communication media usually contains computer-readable instructions, data structures, program modules or other data in modulated data signals such as carrier waves or other transmission mechanisms, and can include any information delivery media.

Some embodiments of the present disclosure are described in conjunction with the drawings above. However, the present disclosure is not limited thereto. Various alternations can be made within the knowledge of a person having ordinary skills in the art without departing from the scope of the present disclosure.

## Claims

1. A method for data distribution, applied to a Customer Premises Equipment (CPE), the method comprising:
receiving an Internet Protocol (IP) packet from a data acquisition and control module; wherein, the IP packet carries a data packet;
acquiring a destination address of the data packet;
performing Virtual extensible Local-Area Network (VXLAN) encapsulation on the data packet, according to the destination address, to acquire a VXLAN packet; and
sending the VXLAN packet to a server.

2. The method as claimed in claim 1, wherein performing the VXLAN encapsulation on the data packet according to the destination address comprises:
acquiring an address of a server corresponding to the destination address, according to the destination address and a pre-configured server address table;
taking the address of the server as an address of a tunnel endpoint server variable; and
performing the VXLAN encapsulation on the data packet, with the address of the tunnel endpoint server variable taken as an outer User Datagram Protocol (UDP) destination address of the VXLAN packet.

3. The method as claimed in claim 2, wherein the server address table comprises a pre-configured multicast server address table and a pre-configured unicast server address table, and acquiring the address of the server corresponding to the destination address according to the destination address and the pre-configured server address table comprises:
acquiring a multicast server address corresponding to the destination address of the data packet, according to the pre-configured multicast server address table, in response to a determination that the destination address is a multicast address; and
acquiring a unicast server address corresponding to the destination address of the data packet, according to the pre-configured unicast server address table, in response to a determination that the destination address is a unicast address.

4. A method for data distribution, applied to a server, the method comprising:
receiving a Virtual eXtensible Local-Area Network (VXLAN) packet from a Customer Premises Equipment (CPE); wherein an outer User Datagram Protocol (UDP) address of the VXLAN packet is an address of the server;
decapsulating the VXLAN packet to acquire an original data packet;
acquiring a data parameter according to the original data packet; and
sending an operative instruction to a control module according to the data parameter, to instruct the control module to perform corresponding control and regulation operations.

5. A system for data distribution, comprising,
a Customer Premises Equipment (CPE), configured to: receive an Internet Protocol (IP) data packet from a data acquisition and control module; wherein the IP data packet carries a data packet; acquire a destination address of the data packet; perform Virtual eXtensible Local-Area Network (VXLAN) encapsulation on the data packet according to the destination address, to acquire a VXLAN packet; and send the VXLAN packet to a server; and
the server configured to: receive the VXLAN packet from the CPE; wherein an outer User Datagram Protocol (UDP) destination address of the VXLAN packet is an address of the server; decapsulate the VXLAN packet to acquire an original data packet; acquire a data parameter according to the data packet; and send an operative instruction to a control module, according to the data parameter, to instruct the control module to perform corresponding control and regulation operations.

6. The system as claimed in claim 5, wherein performing the VXLAN encapsulation on the data packet according to the destination address by the CPE, comprises:
acquiring the address of the server corresponding to the destination address, according to the destination address and a pre-configured server address table;
taking the address of the server as an address of a tunnel endpoint server variable; and
performing the VXLAN encapsulation on the data packet, and taking the address of the tunnel endpoint server variable as the outer User Datagram Protocol (UDP) destination address of the VXLAN packet.

7. The system as claimed in claim 6, wherein the server address table comprises a pre-configured multicast server address table and a pre-configured unicast server address table, and acquiring the address of the server corresponding to the destination address according to the destination address and the pre-configured server address table by the CPE, comprising:
acquiring a multicast server address corresponding to the destination address of the data packet, according to the pre-configured multicast server address table, in response to a determination that the destination address is a multicast address; and
acquiring a unicast server address corresponding to the destination address of the data packet, according to the pre-configured unicast server address table, in response to a determination that the destination address is a unicast address.

8. An operation and control device, comprising at least one controlling processor and a memory configured to be communicatively connected with the at least one controlling processor; wherein the memory stores an instruction executable by the at least one controlling processor which, when executed by the at least one controlling processor, causes the at least one controlling processor to carry out the method as claimed in any one of claims 1 to 3.

9. A terminal device, comprising the operation and control device as claimed in claim 8.

10. A server, comprising at least one controlling processor and a memory configured to be in communicative connection with the at least one controlling processor; wherein the memory stores an instruction executable by the at least one controlling processor which, when executed by the at least one controlling processor, causes the at least one controlling processor to carry out the method as claimed in claim 4.

11. A computer-readable storage medium storing a computer-executable instruction which, when executed by a processor, causes the processor to carry out the method of any one of claims 1 to 4.
